# EUROPÄISCHE PATENTSCHRIFT

(11) **EP 3 740 718 B1**
(45) Veröffentlichungstag und Bekanntmachung des Hinweises auf die Patenterteilung: **15.11.2023**
(21) Anmeldenummer: 19701309.7
(22) Anmeldetag: 15.01.2019
(51) Int. Cl.: F24D 19/10, G05D 23/19

(54) **VERFAHREN ZUR REGELUNG EINER UMWÄLZPUMPE, UMWÄLZPUMPE SOWIE HEIZUNGSANLAGE**
METHOD FOR REGULATING A CIRCULATION PUMP, CIRCULATION PUMP, AND HEATING SYSTEM
PROCÉDÉ DE RÉGULATION D'UNE POMPE DE CIRCULATION, POMPE DE CIRCULATION ET INSTALLATION DE CHAUFFAGE

(30) Priorität: 16.01.2018 DE 102018200652
(43) Veröffentlichungstag der Anmeldung: 25.11.2020
(73) Patentinhaber: KSB SE & Co. KGaA, 67227 Frankenthal (DE)
(72) Erfinder: ECKL, Martin, 67227 Frankenthal (DE); SCHULLERER, Joachim, 67227 Frankenthal (DE)
(86) Internationale Anmeldenummer: PCT/EP2019/050887
(87) Internationale Veröffentlichungsnummer: WO 2019/141661

(56) Entgegenhaltungen:
- EP-A1- 1 323 986
- EP-A2- 0 736 826
- EP-A2- 0 945 620
- DE-A1- 4 312 808

## Beschreibung

Die Erfindung betrifft ein Verfahren zur Regelung einer Umwälzpumpe für eine Heizungsanlage.

Energieeffiziente Umwälzpumpen für Heizungsanlagen werden üblicherweise mit variabler Antriebsdrehzahl betrieben, um die aufgewendete Pumpenarbeit und damit den Energiebedarf der Umwälzpumpe an den aktuellen Heizbedarf der Heizungsanlage anzupassen. Möglich ist dies durch eine Proportionaldruckregelung, wodurch die Drehzahl in Abhängigkeit des hydraulischen Widerstandes des Heizkreislaufes eingestellt wird, der wiederrum maßgeblich von der Stellung der Heizungsventile abhängt. Üblicherweise werden bei der internen Drehzahlregelung der Heizungsumwälzpumpe die von der Pumpe geschätzte Motorleistung sowie ihre Ist-Drehzahl verwendet.

Unabhängig davon steuert der Heizkessel der Heizungsanlage die Temperatur des im Heizkreis durch die Umwälzpumpe geförderten Heizmediums, üblicherweise in Abhängigkeit der mittels Außensensor erfassten Außentemperatur. Bei zweipunktgeregelten Heizungsanlagen wird die Mediumtemperatur zyklisch auf einen einstellbaren Maximalwert erwärmt und der Kessel im Anschluss abgeschaltet. Durch Wärmeverluste und den Wärmeübergang in das zu beheizende Gebäude kühlt die Mediumtemperatur ab. Sinkt die Mediumtemperatur bis zu einem einstellbaren Minimalwert ab, schaltet der Kessel wieder ein und der Heizzyklus beginnt erneut.

Das Abkühlverhalten des umgewälzten Heizungsmediums setzt sich aus den Wärmeverlusten des Heizkessels sowie dem Wärmetransport in die Anlage zusammen. Die Abkühlkurve des Kessels ähnelt dabei regelungstechnisch einem PT₁-Verhalten (Tiefpassverhalten) und ist weitestgehend wiederholgenau, dies zumindest bei Annahme einer konstanten Raumtemperatur. Der Wärmetransport in die Anlage bzw. in das Gebäude ist hingegen in jedem Zeitpunkt unterschiedlich und abhängig von dem aktuellen Wärmebedarf des Gebäudes.

Die EP 0 736 826 A2 offenbart eine temperaturgeführte Leistungsansteuerung für elektrisch betriebene Pumpenaggregate gemäß dem Oberbegriff des Anspruchs 1. Die EP 1 323 986 A1 zeigt ein weiteres Verfahren zum Steuern einer drehregelbaren Heizungsumwälzpumpe. Die EP 0 945 620 A2 offenbart eine Pumpe mit einer integrierten Leistungsregelung.

Die bei einer konventionellen Proportionaldruckregelung der Umwälzpumpe eingesetzten Regelkurven liegen üblicherweise mit deutlichem Abstand über der Anlagenkennlinie, d.h. die verrichtete Pumpleistung liegt über der benötigten Förderleistung, so dass in der Regel ein unnötiger Energieverbrauch vorliegt. Es ist daher wünschenswert die Pumpenleistung durch eine weitere Drehzahlreduktion zu drosseln, um den Betriebspunkt der minimalen Anlagenkennlinie, also der Anlagenkennlinie bei geöffneten Thermostatventilen, möglichst stark anzunähern. Gesucht wird daher nach einem Regelungsansatz, der entweder in Kombination mit bestehenden Regelalgorithmen oder als alleinstehender Regelungsansatz bei einer Umwälzpumpe einsetzbar ist, um eine energetische Optimierung des gesamten Heizungssystems erreichen zu können.

Gelöst wird diese Aufgabe durch ein Verfahren zur Regelung einer Umwälzpumpe für eine Heizungsanlage gemäß den Merkmalen des Anspruchs 1. Vorteilhafte Ausgestaltungen des Verfahrens sind Gegenstand der abhängigen Ansprüche.

Erfindungsgemäß wird vorgeschlagen, dass die Pumpensteuerung den Temperaturverlauf der Mediumtemperatur für eine bestimmte Zeitspanne aufzeichnet und unter Berücksichtigung des aufgezeichneten Temperaturverlaufs die Pumpendrehzahl während des Umwälzbetriebes anpasst. Aus dem Temperatursignal kann die Umwälzpumpe zusätzliche Informationen über das momentane Betriebsverhalten der gesamten Heizungsanlage ableiten. Diese zusätzliche Information erlaubt es, die Drehzahl beispielsweise bei einem geringeren Heizbedarf der Anlage zu reduzieren, um dadurch Energiekosten einzusparen. Im Gegensatz dazu soll gerade bei höherem Heizbedarf die Drehzahl erhöht werden, um einen möglichst schnellen Abtrag der durch den Heizkessel bereitgestellten Wärme in die Anlage bzw. die Räume gewährleisten zu können.

Die Temperaturerfassung des geförderten Mediums kann entweder mittels eines dedizierten Temperatursensors erfolgen, der Bestandteil der Umwälzpumpe ist bzw. auf den die Pumpe zugreifen kann, oder alternativ aber mittelbar auf Grundlage sonstiger Messgrößen erfolgen. Als Beispiel sei an dieser Stelle eine Bestimmung der Mediumtemperatur anhand der Wicklungstemperatur und eines Wicklungsstroms des pumpeninternen Antriebsaggregats. Ein entsprechendes Verfahren ist bspw. aus der deutschen Patentanmeldung DE 10 2017 203 925.6 bekannt, auf deren Inhalt an dieser Stelle ausdrücklich Bezug genommen wird.

Bevorzugt ist es, wenn anhand des aufgezeichneten Temperaturverlaufs der aktuelle Kesselzustand ermittelt wird, insbesondere dahingehend, ob sich dieser in der Aufheiz- oder Abkühlphase befindet. Gemäß weiterer Ausgestaltung ist es vorstellbar, dass anhand des aufgezeichneten Temperaturverlaufs die Zyklusdauer des Heizkessels bestimmt wird, bspw. die Dauer zwischen zwei Aufheizphasen.

Gemäß der Erfindung ist vorgesehen, dass anhand des aufgezeichneten Temperaturverlaufs eine mittlere Abkühlkurve für die Mediumtemperatur bestimmt wird. Hierfür wird beispielsweise das Temperaturverhalten der Mediumtemperatur für eine Vielzahl von Abkühlphasen des Kessels erfasst und darauf basierend eine mittlere Abkühlkurve bestimmt. Bevorzugt werden die Temperaturverläufe für eine Vielzahl unmittelbar aufeinanderfolgender Abkühlphasen erfasst. Denkbar ist es jedoch ebenfalls, die Vielzahl an erfassten Abkühlphasen zeitlich breiter zu streuen, um damit unterschiedliche Betriebsbedingungen in der Berechnung der mittleren Abkühlkurve erfassen zu können. Die mittlere Abkühlkurve ist somit charakteristisch für den mittleren Heizbedarf des Gebäudes bzw. der Heizungsanlage.

Von besonderer Bedeutung ist die Kurvensteigung der mittleren Abkühlkurve, d.h. die Geschwindigkeit mit der die Temperatur des Mediums innerhalb der Abkühlphase abfällt.

Im nachfolgenden Pumpenbetrieb werden nunmehr der gemessene Ist-Temperaturwert des Mediums und/oder ein erfasster Ist-Temperaturabfall gegen die mittlere Abkühlkurve verglichen. Bei Betrachtung eines Ist-Temperaturwertes muss zudem eine zeitliche Zuordnung des Messzeitpunktes während der Abkühlphase möglich sein. Einfacher und aussagekräftiger ist die Erfassung eines Ist-Temperaturabfalls und ein nachfolgender Vergleich gegen den Temperaturabfall der mittleren Abkühlkurve. Ein erfasster Ist-Temperaturabfall stellt beispielsweise eine Temperaturabnahme über eine bestimmte Zeitspanne während einer Abkühlphase dar. Ist der Temperaturabfall bzw. die entsprechende negative Kurvensteigung größer als diejenige der mittleren Abkühlkurve, so kann davon ausgegangen werden, dass der aktuelle Heizbedarf größer ist als der mittlere Heizbedarf. Die Pumpendrehzahl wird vorzugsweise erhöht, um den Wärmeübergang in das Gebäude zu beschleunigen. Ist der aktuell gemessene Ist-Temperaturabfall stattdessen kleiner als der Temperaturabfall der mittleren Abkühlkurve, liegt der aktuelle Heizbedarf demzufolge unterhalb des mittleren Heizbedarfs und die Pumpendrehzahl kann zur Energieeinsparung reduziert werden.

Sinnvollerweise kann bei diesem Verfahren vorgesehen sein, dass die Pumpe stets mit einer erhöhten, insbesondere mit maximaler Drehzahl betrieben wird, falls anhand des Temperaturverlaufs des Heizungsmediums eine Aufheizphase des Kessels erkannt wird. Eine Aufheizphase kann durch die Pumpensteuerung bspw. anhand einer ansteigenden Mediumtemperatur erkannt werden.

Besonders bevorzugt ist es, wenn die vorstehend erläuterten Verfahrensschritte in Kombination mit einer konventionellen Pumpenregelung ausgeführt werden, und mittels der erfindungsgemäßen Verfahrensschritte eine Anpassung des Soll-Wertes der konventionellen Regelung erfolgt. Beispielhaft sei an dieser Stelle die Kombination mit einer konventionellen Proportionaldruckregelung zur Einstellung der Pumpendrehzahl genannt

Als alternative Vorgehensweise kann vorgesehen sein, dass die Pumpendrehzahl auf oder um einen vordefinierten Wert geändert wird, insbesondere falls die Pumpe eine Aufheizphase des Kessels erkennt. Nimmt beispielsweise die Mediumtemperatur zu, so soll gleichfalls die Pumpendrehzahl entsprechend angepasst werden.

Eine optimale Anpassung der Soll-Drehzahl kann beispielsweise durch einen Gewichtungsfaktor erzielt werden. Mittels des Gewichtungsfaktors erfolgt eine Anpassung der eigentlichen Soll-Drehzahl der internen Drehzahlvorgabe. Beispielhaft wird die Umwälzpumpe mit einer Proportionaldruckregelung betrieben. Die hierdurch bestimmte Soll-Drehzahl wird mit dem Gewichtungsfaktor beaufschlagt, um diese im Hinblick auf die aktuelle Kesselphase anzupassen.

Gemäß vorteilhafter Ausgestaltung wird ein Faktor k als Gewichtung herangezogen, der mit ansteigender Mediumtemperatur zunimmt. Denkbar ist eine sprungartige Änderung des Faktors k im Hinblick auf die Mediumtemperatur, möglich ist auch ein kontinuierlicher, insbesondere mit der Mediumtemperatur proportionaler Anstieg des Gewichtungsfaktors k. Grundsätzlich ist jeder mathematische Zusammenhang zwischen dem Gewichtungsfaktor k und der Mediumtemperatur denkbar.

Unter Verwendung des Gewichtungsfaktors k wird die Pumpendrehzahl bei ansteigender Mediumtemperatur sprungartig, kontinuierlich, proportional oder in sonstiger Weise erhöht, wodurch die über die Mediumtemperatur bereitgestellte Energie schneller in das Gebäude gebracht werden kann. Andersrum wird bei Abnahme der Mediumtemperatur die Drehzahl der Umwälzpumpe reduziert. Dies ist gerade für niedrige Mediumtemperaturen sinnvoll, da hier ein Wärmeübergang ins Gebäude nur bedingt möglich ist.

Eine Möglichkeit zur Anpassung des Gewichtungsfaktors besteht darin, ein oder mehrere Temperaturschwellwerte vorzugeben, bei deren Über- oder Unterschreiten durch die aktuelle Mediumtemperatur eine Änderung des Gewichtungsfaktors erfolgt. Prinzipiell ist die Definition einer einzelnen Schwellwerttemperatur ausreichend. Liegt die Mediumtemperatur oberhalb des Schwellwertes nimmt der Faktor k einen ersten höheren Wert an, bspw. einen Wert größer 1 an. Liegt die Mediumtemperatur stattdessen unterhalb der Schwelle, so nimmt der Gewichtungsfaktor einen zweiten kleineren Wert an, bspw. einen Wert kleiner 1 an.

Ein oder mehrere Schwellwerttemperaturen kann die Umwälzpumpe bspw. selbständig anhand des aufgezeichneten Temperaturverlaufs der Mediumtemperatur festlegen. Möglich ist jedoch auch eine manuelle Konfiguration einer oder mehrerer Temperaturschwellen. Vorstellbar ist es, wenn die Schwellwerttemperatur der mittleren Mediumtemperatur während einer Zyklusdauer des Kessels entspricht. Diese kann die Pumpensteuerung selbständig anhand des aufgezeichneten Temperaturverlaufs ermitteln. Neben dem erfindungsgemäßen Verfahren betrifft die vorliegende Erfindung ebenfalls eine Umwälzpumpe mit einem drehzahlregelbaren Pumpenantrieb und einer Steuer- und/oder Regeleinheit zur Ausführung des Verfahrens gemäß der vorliegenden Erfindung. Zur Vermeidung von Wiederholungen wird auf eine erneute Beschreibung der Vorteile und Einzelheiten der Steuer- und/oder Regeleinheit verzichtet.

Ferner betrifft die Erfindung eine Heizungsanlage umfassend wenigstens eine Umwälzpumpe sowie wenigstens einen Heizkessel, insbesondere einen Zwei-Punkt geregelten Heizkessel, der bei Erreichen einer oberen Maximaltemperatur abgeschaltet und nach Abkühlen des Heizungsmediums auf eine untere Minimaltemperatur erneut gestartet wird.

Vorstellbar ist es, dass die Umwälzpumpe im Vorlauf oder Rücklauf angeordnet ist. Die Ausführung des erfindungsgemäßen Regelverhaltens bleibt davon unberührt, die Auswirkungen auf das tatsächliche Regelverhalten und die Energie der Umwälzpumpe können jedoch abhängig von der Position im Vorlauf oder Rücklauf sein.

Weitere Vorteile und Eigenschaften der Erfindung sollen im Folgenden anhand eines in den Figuren dargestellten Ausführungsbeispiels näher erläutert werden. Es zeigen:
- Figur 1:: eine schematische Übersicht einer Heizungsanlage mit der erfindungsgemäßen Umwälzpumpe;
- Figur 2:: der zeitliche Verlauf der Mediumtemperatur im Vorlauf und Rücklauf einer Heizungsanlage bei Steuerung des Heizkessels auf Grundlage der Vorlauftemperatur;
- Figur 3:: eine Diagrammdarstellung des zeitlichen Verlaufs der Vorlauf- und Rücklauftemperatur bei Steuerung des Heizungskessels in Abhängigkeit der Rücklauftemperatur und
- Figur 4:: eine Gegenüberstellung des zeitlichen Verhaltens der Mediumtemperatur und des erfindungsgemäßen Gewichtungsfaktors k.

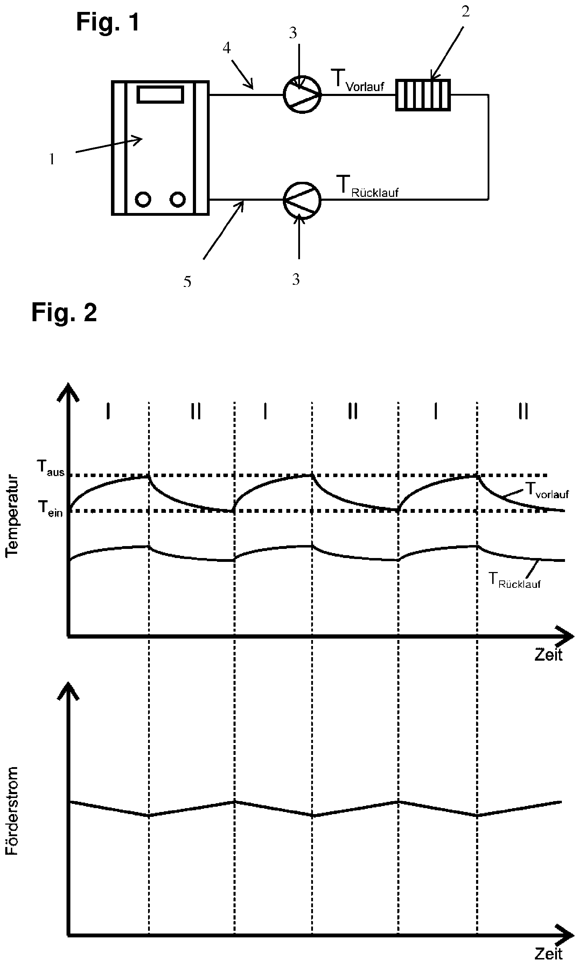

Figur 1 zeigt zunächst den schematischen Aufbau einer Heizungsanlage mit dem Kessel 1 sowie einem im Gebäude vorgesehenen Heizkörper 2. Eine Umwälzpumpe 3 zur Umwälzung des Heizungswassers im Heizkreislauf kann entweder im Vorlauf 4 oder im Rücklauf 5 angeordnet sein, was durch die schematische Darstellung mit jeweils einer Umwälzpumpe 3 für Vor- und Rücklauf angedeutet ist.

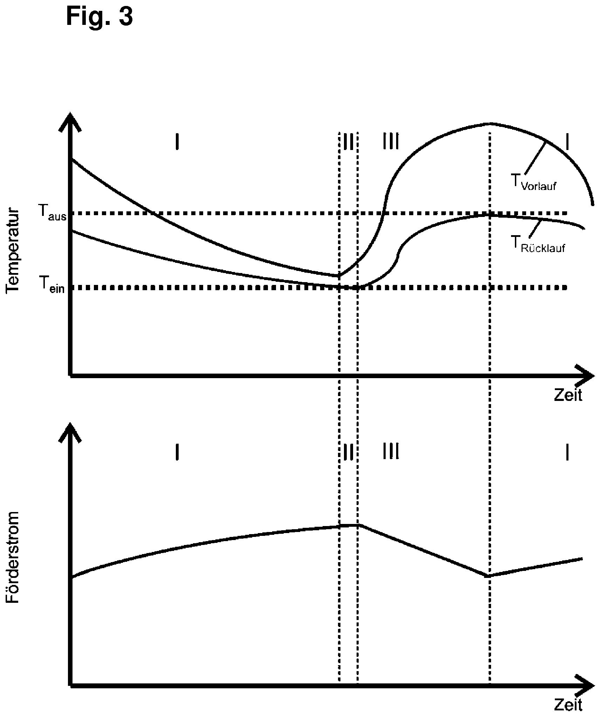

Der Heizkessel 1 umfasst eine Zweipunktregelung mit einer oberen Ausschalttemperatur Tₐᵤₛ und einer unteren Einschalttemperatur Tₑᵢₙ. Kühlt das Medium auf die untere Temperatur Tₑᵢₙ ab, so startet der Heizkessel 1 und heizt das Medium bis zum Erreichen des oberen Temperaturwertes Tₐᵤₛ auf, d.h. der Kessel 1 wird nach Erreichen dieser oberen Grenze abgeschaltet. Dieser Heizzyklus des Heizkessels ist in den Figuren 2 und 3 verdeutlicht.

In Figur 2 oben ist der zeitliche Verlauf der Vor- und Rücklauftemperatur T_{Vorlauf}, T_{Rücklauf} dargestellt. Der zweipunktgeregelte Kessel 1 berücksichtigt für die Regelung die Vorlauftemperatur T_{Vorlauf}, wodurch der Kessel 1 seinen Brenner einschaltet, sobald die Vorlauftemperatur T_{Vorlauf} die Untergrenze (Tₑᵢₙ) unterschreitet, und seinen Brenner abschaltet, falls die Vorlauftemperatur T_{Vorlauf} die Obergrenze (Tₐᵤₛ) erreicht. Der Verlauf der Rücklauftemperatur T_{Rücklauf} ähnelt charakteristisch der Vorlauftemperatur T_{Vorlauf}, allerdings mit kleinerer Amplitude.

Der Bereich I stellt die Phasen dar, während der der Kessel 1 eingeschaltet ist. Die Vorlauftemperatur T_{Vorlauf} steigt schneller als die Rücklauftemperatur T_{Rücklauf} an, sodass ein erhöhter Wärmeeintrag in das Gebäude stattfindet. Als Folge dessen schließen die Thermostatventile und der Förderstrom sinkt. Der Bereich II stellt die Phasen dar, bei denen der Kessel 1 ausgeschaltet ist. Die Vorlauftemperatur T_{Vorlauf} sinkt stärker als die Rücklauftemperatur T_{Rücklauf}, sodass ein geringerer Wärmeeintrag in das Gebäude stattfindet. Als Folge dessen öffnen die Thermostatventile und der Förderstrom steigt.

Figur 3 zeigt das zeitliche Verhalten der Rücklauf- bzw. Vorlauftemperatur T_{Rücklauf}, T_{Vor-lauf} für einen Heizkessel 1, der anders als in der Figur 2, die Temperatur im Rücklauf als Kriterium für das An- und Ausschalten heranzieht. Bei der Regelung der Rücklauftemperatur T_{Rücklauf} hält der Kessel 1 die Temperatur konstant, mit der das Medium aus dem Gebäude austritt. Der Bereich I zeigt die Phase während der der Kessel 1 ausgeschaltet ist. Vor- und Rücklauftemperatur T_{Vorlauf}, T_{Rücklauf} nehmen ab. Da die Vorlauftemperatur T_{Vorlauf} stärker absinkt als die Rücklauftemperatur T_{Rücklauf}, nimmt die Differenz zwischen Vor- und Rücklauftemperatur T_{Vorlauf}, T_{Rücklauf} und dadurch der Wärmeeintrag in das Gebäude ab. Der geringere Wärmeeintrag führt zu einem Öffnen der Thermostatventile und dadurch zu einem Anstieg des Förderstroms.

Der Bereich II beginnt, wenn die Rücklauftemperatur T_{Rücklauf} die untere Schwelle (Tₑᵢₙ) erreicht hat. Der Kessel 1 schaltet den Brenner ein und die Vorlauftemperatur T_{Vorlauf} steigt sprunghaft an. Die Rücklauftemperatur T_{Rücklauf} fällt zunächst weiter ab, da sich das Medium noch im Gebäude befindet. Nachdem das Medium durch das gesamte Gebäude geflossen ist, steigt auch die Rücklauftemperatur T_{Rücklauf} an. Mit diesem Zeitpunkt beginnt die Phase III. Durch den höheren Wärmeeintrag in das Gebäude schließen die Thermostatventile und der Förderstrom reduziert sich.

Im Folgenden sollen die alternativen bzw. sich ergänzenden Regelungsansätze für die Umwälzpumpe 3 näher erläutert werden. Diese Regelungsstrategien können entweder als selbstständige Regelung in einer Umwälzpumpe 3 eingesetzt werden oder jedoch in Kombination mit einer an sich bekannten Proportionaldruckregelung oder Konstantdruckregelung Verwendung finden.

Gemäß dem ersten Ansatz (Ansatz der Berücksichtigung des Wärmebedarfs der Anlage) wird die Temperatur des Fördermediums zum besseren Verständnis des momentanen Betriebsverhaltens der Anlage und somit zur Verbesserung der Drehzahlregelung verwendet. Je nach Montageort der Umwälzpumpe 3 wird also entweder die Vorlauftemperatur T_{Vorlauf} oder die Rücklauftemperatur T_{Rücklauf} in der Pumpensteuerung der Umwälzpumpe 3 betrachtet.

Konkret wird die Fluidtemperatur durch die Umwälzpumpe 3 über einen längeren Zeitraum aufgezeichnet und anschließend eine mittlere Abkühlkurve des Heizungsmediums berechnet. Die Aufzeichnung erfolgt vorzugsweise über mehrere Heizzyklen des Heizkessels 1, sodass eine aussagekräftige mittlere Abkühlkurve bestimmbar ist, die den mittleren Heizbedarf der Anlage charakterisiert. Im Folgenden wird diese Abkühlkurve daher als durchschnittliches Betriebsverhalten bezeichnet.

Während des weiteren Betriebs der Anlage wird von der Pumpe 3 beobachtet, ob ein momentaner Temperaturabfall (ΔT) der Mediumtemperatur über oder unter diesem ermittelten durchschnittlichen Betriebsverhalten liegt, d.h. kleiner oder größer als der Temperaturabfall der mittleren Abkühlkurve ist. Mit der Annahme, dass die Verlustkurve des Kessels 1 annäherungsweise konstant ist, lässt sich so bestimmen, ob der momentane Bedarf der Heizungsanlage über oder unter dem Durchschnitt liegt. Liegt der momentane Verbrauch unter dem durchschnittlichen Betriebsverhalten, d.h. ist der Temperaturabfall ΔT kleiner als der Temperaturabfall der mittleren Abkühlkurve, kann die Drehzahl der Umwälzpumpe 3 zur Energieersparnis abgesenkt werden.

Demgegenüber kann bei einem hohen Momentanverbrauch die Pumpendrehzahl hochgehalten werden bzw. noch weiter erhöht werden. Erkennt die Pumpe 3 einen Anstieg der Mediumtemperatur, nimmt die Pumpe 3 an, dass sich der Kessel aktuell in der Aufheizphase befindet (beispielsweise Phase I in Figur 2 bzw. Phase III in Figur 3). In diesem Fall wird die Drehzahl immer hoch gesetzt.

Dieser Regelungsansatz stellt eine Alternative zur bisher üblichen Proportionaldruckregelung dar. Bei diesem konventionellen Regelungsverfahren führt ein hoher Wärmebedarf der Anlage dazu, dass der Förderstrom durch die Pumpe steigt. Dies wird von der Pumpe erkannt und mit einem Anstieg der Drehzahl entsprechend einer festgelegten Regelkurve reagiert. Ein geringerer Wärmebedarf der Anlage führt zu einem Absinken des Wärmestroms. Die Pumpe erkennt dies und senkt die Drehzahl. Mit der hier vorgestellten Idee verhält sich die Pumpe dazu sehr ähnlich. Ein höherer Wärmebedarf der Anlage führt zu einem schnelleren Temperaturabfall des Fluides, was durch die Pumpe 3 erkannt wird. Darauf antwortet die Pumpe 3 mit einer Erhöhung ihrer Drehzahl. Bei geringerem Wärmebedarf der Anlage fällt die Fluidtemperatur langsamer und die Pumpe 3 kann ihre Drehzahl entsprechend absenken.

Auch wenn sich die klassische Proportionaldruckregelung und die hier vorgestellte Lösung im Prinzip ähnlich verhalten, kann dennoch eine Erhöhung der Energieeffizienz durch eine Kombination beider Ansätze erreicht werden. Die bisher eingesetzten Regelkurven liegen meistens mit deutlichem Abstand über der Anlagenkennlinie. Über das Temperatursignal erhält die Pumpe 3 nun zusätzliche Informationen über das momentane Betriebsverhalten. Diese Informationen lassen sich nun vorteilhafterweise zur Verringerung des Abstandes zwischen Regelkurve und Anlagenkennlinie einsetzen, wodurch letztendlich eine weitere Reduktion des Energiebedarfs erreicht wird.

Ein weiterer Ansatz zur Steuerung der Drehzahl berücksichtigt den momentan möglichen Wärmetransport, der maßgeblich vom Temperaturniveau des Mediums abhängt. Hierzu erfasst die Pumpe 3 über einen längeren Zeitraum den Temperaturverlauf der Mediumtemperatur und bestimmt daraus die Zyklusdauer des Heizkessels 1, d.h. die Zeit zwischen zwei Aufwärmphasen. Die Drehzahl der Pumpe 3 wird in bekannter Art und Weise mit einer Proportionaldruckregelung eingestellt. Ergänzend wird jedoch der Regelungsausgang, d.h. die Soll-Drehzahl mit einem Faktor k gewichtet, um diese in Abhängigkeit des möglichen Wärmetransportes anzupassen.

Zu Beginn eines Zyklus ist der Faktor k hoch, da eine hohe Fluidtemperatur einen hohen Wärmetransport in die Anlage sicherstellt. Mit abnehmender Mediumtemperatur, d.h. gegen Ende des Zyklus wird der Faktor k abgesenkt, sodass dieser zum Ende des Zyklus einen deutlich reduzierten Wert annehmen kann. Dies ist insofern sinnvoll, da zu diesem Zeitpunkt die Fluidtemperatur vergleichsweise niedrig ist und demzufolge kein großer Wärmetransport in die Anlage stattfinden kann.

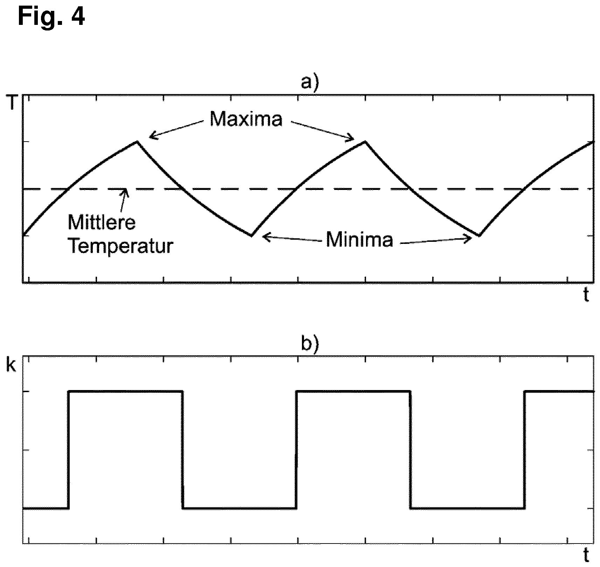

Das erläuterte Prinzip soll nochmals anhand der Darstellung in Figuren 4 erläutert werden. Mit a) ist der zeitliche Verlauf der Mediumtemperatur durch die Umwälzpumpe 3 gekennzeichnet. Die Mediumtemperatur schwankt hierbei zyklisch zwischen ihrem Maximal- und Minimalwerten, die durch die Ein- und Ausschaltemperatur Tₑᵢₙ, Tₐᵤₛ der Kesselsteuerung vorgegeben werden. Die Dauer eines Zyklus wird bspw. durch den zeitlichen Abstand zwischen zwei Aufheizphasen (I bzw. III in Figur 2 oder 3), d.h. zwischen zwei benachbarten Minima des Temperaturverlaufs der Darstellung a) definiert. Aus dem Temperaturverlauf berechnet die Pumpensteuerung nun die mittlere Temperatur, die in der Darstellung a) durch die unterbrochene horizontale Linie gezeigt ist.

Der Bereich unter dieser mittleren Temperatur kennzeichnet die Zeiten, in denen die Fluidtemperatur gering ist und folglich nur ein geringer Wärmeeintrag in das Gebäude stattfinden kann. Da dieser geringe Wärmeeintrag kaum einen Einfluss auf die Gebäudetemperatur hat, kann die Pumpe 3 während dieser Zeitspanne mit einer sehr geringen Drehzahl betrieben werden, um Strom zu sparen. Dazu wird der Gewichtungsfaktor k für den Temperaturverlauf unterhalb der mittleren Temperatur auf einen geringeren Wert umgeschaltet, während zu Zeiten, in denen die Mediumtemperatur oberhalb der mittleren Temperatur liegt, der Gewichtungsfaktor k auf einen höheren Wert umgeschaltet wird. Einen möglichen zeitlichen Verlauf (in Anlehnung an das Zeitdiagramm der Darstellung a) des Faktors k ist der Darstellung b) der Figur 4 zu entnehmen. Überschreitet die Mediumtemperatur die mittlere Temperatur, so nimmt der Faktor k einen höheren Wert, bspw. 1,2 an, während er bei einem Abfall der Mediumtemperatur unterhalb der definierten Schwelle einen geringeren Wert, bspw. 0,6 annimmt.

Eine Kombination des beschriebenen Ansatzes der Berücksichtigung des Wärmebedarfs der Anlage und des Ansatzes der Berücksichtigung des momentan möglichen Wärmetransportes liegt ebenfalls im Rahmen der Erfindung.

## Patentansprüche

1. Verfahren zur Regelung einer Umwälzpumpe (3) für eine Heizungsanlage, wobei die Pumpensteuerung den Temperaturverlauf der Mediumtemperatur für eine bestimmte Zeitspanne aufzeichnet und unter Berücksichtigung des aufgezeichneten Temperaturverlaufs die Pumpendrehzahl während des Umwälzbetriebs anpasst, **dadurch gekennzeichnet, dass** anhand des aufgezeichneten Temperaturverlaufs eine mittlere Abkühlkurve für die Mediumtemperatur während einer Abkühlphase des Heizkessels (1) bestimmt wird, wobei die mittlere Abkühlkurve charakteristisch für einen mittleren Heizbedarf der Heizungsanlage ist.

2. Verfahren nach Anspruch 1, **dadurch gekennzeichnet, dass** anhand des aufgezeichneten Temperaturverlaufs der Kesselzustand ermittelt wird, insbesondere ob sich der Kessel (1) in der Aufheiz- oder Abkühlphase befindet, wobei weiterhin vorgesehen sein kann, dass die Zyklusdauer zwischen zwei Aufheizphasen des Kessels (1) bestimmt wird,

3. Verfahren nach Anspruch 1, **dadurch gekennzeichnet, dass** der aktuell gemessene Ist-Temperaturwert des Mediums und/oder ein erfasster Ist-Temperaturabfall gegen die mittlere Abkühlkurve verglichen wird.

4. Verfahren nach Anspruch 3, **dadurch gekennzeichnet, dass** die Pumpendrehzahl erhöht wird, falls die Ist-Temperatur des Mediums oberhalb der mittleren Abkühlkurve liegt bzw. der erfasste Ist-Temperaturabfall größer als derjenige der mittleren Abkühlkurve ist, und/oder die Pumpendrehzahl reduziert wird, falls die Ist-Temperatur des Mediums unterhalb der mittleren Abkühlkurve liegt bzw. der erfasste Ist-Temperaturabfall kleiner als derjenige der mittleren Abkühlkurve ist.

5. Verfahren nach einem der vorhergehenden Ansprüche, **dadurch gekennzeichnet, dass** die Pumpendrehzahl auf oder um einen vordefinierten Wert geändert wird, falls die Umwälzpumpe (3) eine Aufheizphase des Kessels (1) erkennt, bevorzugt wird die Umwälzpumpe (3) in diesem Fall mit maximaler Drehzahl betrieben.

6. Verfahren nach einem der Ansprüche 1 oder 2, **dadurch gekennzeichnet, dass** eine Soll-Drehzahl der Umwälzpumpe (3) mit einem von der Mediumtemperatur abhängigen Faktor k gewichtet wird, wobei der Faktor k vorzugsweise mit ansteigender Mediumtemperatur zunimmt.

7. Verfahren nach Anspruch 6, **dadurch gekennzeichnet, dass** die Umwälzpumpe anhand des aufgezeichneten Temperaturverlaufs wenigstens eine Schwellwerttemperatur des Mediums ermittelt, bei deren Überschreitung der Faktor k angepasst wird.

8. Verfahren nach Anspruch 7, **dadurch gekennzeichnet, dass** wenigstens eine Schwellwerttemperatur die mittlere Temperatur des Mediums während einer Zyklusdauer des Kessels (1) ist.

9. Verfahren nach einem der vorhergehenden Ansprüche, **dadurch gekennzeichnet, dass** die erfindungsgemäßen Verfahrensschritte in Kombination mit einer Proportionaldruckregelung oder Konstantdruckregelung ausgeführt werden.

10. Umwälzpumpe mit einem drehzahlregelbaren Pumpenantrieb und einer Steuer- und/oder Regeleinheit, die konfiguriert ist zur Ausführung des Verfahrens nach einem der vorhergehenden Ansprüche.

11. Heizungsanlage umfassend wenigstens eine Umwälzpumpe nach Anspruch 10 sowie wenigstens einen Heizkessel (1), insbesondere zweipunktgeregelten Heizkessel (1).

12. Heizungsanlage nach Anspruch 11, **dadurch gekennzeichnet, dass** die Umwälzpumpe (3) im Vorlauf (4) oder Rücklauf (5) angeordnet ist.

## Claims

1. Method for regulating a circulation pump (3) for a heating installation, wherein the pump controller records the temperature profile of the medium temperature for a particular time period and, taking into the account the recorded temperature profile, adapts the pump rotational speed during circulation operation, **characterized in that**, on the basis of the recorded temperature profile, a mean cooling curve for the medium temperature during a cooling phase of the heating boiler (1) is determined, wherein the mean cooling curve is characteristic of a mean heating requirement of the heating installation.

2. Method according to Claim 1, **characterized in that**, on the basis of the recorded temperature profile, the boiler state is ascertained, it being ascertained in particular whether the boiler (1) is in the heating or cooling phase, wherein provision may furthermore be made for the cycle duration between two heating phases of the boiler (1) to be determined.

3. Method according to Claim 1, **characterized in that** the presently measured actual temperature value of the medium and/or a detected actual temperature drop are/is compared with the mean cooling curve.

4. Method according to Claim 3, **characterized in that** the pump rotational speed is increased if the actual temperature of the medium is above the mean cooling curve or the detected actual temperature drop is greater than that of the mean cooling curve, and/or the pump rotational speed is reduced if the actual temperature of the medium is below the mean cooling curve or the detected actual temperature drop is less than that of the mean cooling curve.

5. Method according to one of the preceding claims, **characterized in that** the pump rotational speed is changed to or by a predefined value if the circulation pump (3) identifies a heating phase of the boiler (1), the circulation pump (3) preferably being operated at maximum rotational speed in this case.

6. Method according to either of Claims 1 and 2, **characterized in that** a target rotational speed of the circulation pump (3) is weighted by a medium-temperature-dependent factor k, wherein the factor k preferably increases with rising medium temperature.

7. Method according to Claim 6, **characterized in that**, on the basis of the recorded temperature profile, the circulation pump ascertains at least one threshold-value temperature of the medium, upon exceedance of which the factor k is adapted.

8. Method according to Claim 7, **characterized in that** at least one threshold-value temperature is the mean temperature of the medium during a cycle duration of the boiler (1).

9. Method according to one of the preceding claims, **characterized in that** the method steps according to the invention are carried out in combination with proportional-pressure regulation or constant-pressure regulation.

10. Circulation pump having a pump drive which is regulable in terms of rotational speed, and having a control and/or regulating unit which is configured for carrying out the method according to one of the preceding claims.

11. Heating installation comprising at least one circulation pump according to Claim 10 and at least one heating boiler (1), in particular heating boiler (1) subjected to on-off regulation.

12. Heating installation according to Claim 11, **characterized in that** the circulation pump (3) is arranged in the feed (4) or return (5).

## Revendications

1. Procédé de régulation d'une pompe de circulation (3) pour une installation de chauffage, la commande de la pompe enregistrant l'évolution de température de la température du fluide pendant une période de temps déterminée et adaptant la vitesse de rotation de la pompe pendant le fonctionnement du circulation en tenant compte de l'évolution de température enregistrée, **caractérisé en ce qu'**à l'aide de l'évolution de température enregistrée, une courbe de refroidissement moyenne pour la température du fluide pendant une phase de refroidissement de la chaudière (1) est déterminée, la courbe de refroidissement moyenne étant caractéristique d'une demande de chauffage moyenne de l'installation de chauffage.

2. Procédé selon la revendication 1, **caractérisé en ce que** l'état de la chaudière est déterminé à l'aide de l'évolution de température enregistrée, notamment si la chaudière (1) se trouve dans la phase de chauffage ou de refroidissement, il pouvant en outre être prévu que la durée du cycle entre deux phases de chauffage de la chaudière (1) soit déterminée.

3. Procédé selon la revendication 1, **caractérisé en ce que** la valeur de température réelle actuellement mesurée du fluide et/ou une chute de température réelle détectée est comparée à la courbe de refroidissement moyenne.

4. Procédé selon la revendication 3, **caractérisé en ce que** la vitesse de rotation de la pompe est augmentée si la température réelle du fluide est au-dessus de la courbe de refroidissement moyenne ou si la chute de température réelle détectée est supérieure à celle de la courbe de refroidissement moyenne, et/ou la vitesse de rotation de la pompe est réduite si la température réelle du fluide est en-dessous de la courbe de refroidissement moyenne ou si la chute de température réelle détectée est inférieure à celle de la courbe de refroidissement moyenne.

5. Procédé selon l'une quelconque des revendications précédentes, **caractérisé en ce que** la vitesse de rotation de la pompe est modifiée à ou autour d'une valeur prédéfinie si la pompe de circulation (3) détecte une phase de chauffage de la chaudière (1), de préférence la pompe de circulation (3) fonctionne dans ce cas à la vitesse de rotation maximale.

6. Procédé selon l'une quelconque des revendications 1 ou 2, **caractérisé en ce qu'**une vitesse de rotation de consigne de la pompe de circulation (3) est pondérée par un facteur k dépendant de la température du fluide, le facteur k augmentant de préférence avec l'augmentation de la température du fluide.

7. Procédé selon la revendication 6, **caractérisé en ce que** la pompe de circulation détermine, à l'aide de l'évolution de température enregistrée, au moins une température de seuil du fluide, lors du dépassement de laquelle le facteur k est adapté.

8. Procédé selon la revendication 7, **caractérisé en ce qu'**au moins une température de seuil est la température moyenne du fluide pendant une durée de cycle de la chaudière (1).

9. Procédé selon l'une quelconque des revendications précédentes, **caractérisé en ce que** les étapes de procédé selon l'invention sont exécutées en combinaison avec une régulation de pression proportionnelle ou une régulation de pression constante.

10. Pompe de circulation avec un entraînement de pompe à vitesse de rotation régulable et une unité de commande et/ou de régulation, qui est configurée pour exécuter le procédé selon l'une quelconque des revendications précédentes.

11. Installation de chauffage comprenant au moins une pompe de circulation selon la revendication 10, ainsi qu'au moins une chaudière (1), notamment une chaudière (1) régulée en deux points.

12. Installation de chauffage selon la revendication 11, **caractérisée en ce que** la pompe de circulation (3) est agencée dans le circuit aller (4) ou dans le circuit retour (5).
